# EUROPÄISCHE PATENTSCHRIFT

(11) **EP 2 038 056 B1**
(45) Veröffentlichungstag und Bekanntmachung des Hinweises auf die Patenterteilung: **19.08.2009**
(21) Anmeldenummer: 07765487.9
(22) Anmeldetag: 19.06.2007
(51) Int. Cl.: B01J 19/30

(54) **TRAGROST FÜR FÜLLKÖRPERPACKUNGEN**
SUPPORT GRID FOR PACKINGS
GRILLE-SUPPORT POUR EMPAQUETAGES DE MASSES DE REMPLISSAGE

(30) Priorität: 19.06.2006 DE 102006028407
(43) Veröffentlichungstag der Anmeldung: 25.03.2009
(73) Patentinhaber: SGL Carbon SE, 65203 Wiesbaden (DE)
(72) Erfinder: KLINGER, Jürgen, 86494 Emersacker (DE); GOLLING, Manfred, 86356 Neusäss (DE); PAULA, Josef, 86641 Rain (DE)
(86) Internationale Anmeldenummer: PCT/EP2007/056067
(87) Internationale Veröffentlichungsnummer: WO 2007/147820

(56) Entgegenhaltungen:
- EP-A- 0 374 443
- WO-A-96/03207
- WO-A-98/41321
- DE-A1-3102004 015 39
- GB-A- 2 046 623
- US-A- 4 814 117

## Beschreibung

Die Erfindung betrifft einen Tragrost für Füllkörperpackungen, der in Gas-Flüssigkeits-Trennkolonnen wie Gaswäschern oder Destillationskolonnen für die Halterung von Füllkörperschüttungen eingesetzt wird. Wesentlich für den angestrebten Erfolg der genannten Stofftrennung ist es, eine möglichst große Oberfläche für den Stoffaustausch bereitzustellen, wobei gleichzeitig zur Verringerung des Energieeinsatzes ein möglichst großer freier Querschnitt zur Verminderung des Strömungswiderstandes gefordert wird, Da Füllkörper nicht in beliebiger Menge übereinander geschüttet werden können, ohne dass mit einer Zerstörung ihrer Form durch die aufliegende Masse und damit einer Verringerung des freien Querschnitts gerechnet werden muss, sind Zwischenabstützungen in Form der die Schütthöhe der Füllkörper begrenzenden Tragroste erforderlich. Die Gestaltung der Tragroste hat deshalb einen Einfluss auf den Strömungswiderstand in der Trennkolonne.

Aus dem Stand der Technik sind verschiedene Tragroste für Füllkörper als Kolonneneinbauten bekannt, die je nach den Anforderungen hinsichtlich der Materialbeständigkeit für den angewandten Temperaturbereich und der Beständigkeit gegenüber den eingesetzten Materialien sowie der Tragfähigkeit einer entsprechenden Füllkörperschüttmasse aus bekannten Werkstoffen hergestellt werden. Dabei sind die Anforderungen schwierig miteinander vereinbar, weil entweder die Anforderung an die Tragfähigkeit oder die an einen geringen Strömungswiderstand unzureichend erfüllt werden.

In EP 0374443 wird ein kombiniertes Bauteil beschrieben, in welchem der Füllkörpertragrost und der Sammel- oder Verteilerboden in Form von parallel zueinander liegenden Rinnen eine Einheit bilden oder als Ganzes in eine Stoff- oder Wärmeaustauschkolonne eingesetzt werden können.

Die Erfindung hat sich die Aufgabe gestellt, einen Tragrost der gattungsgemäß beschriebenen Art anzugeben, der den beim Stand der Technik vorhandenen Widerspruch der Anforderungen reduziert. Die Erfindung hat sich weiterhin die Aufgabe gestellt, einen Tragrost anzugeben, der eine einfache Montage und Wartung gestattet. Die Erfindung betrifft letztlich, ein Verfahren zur Montage eines erfindungsgemäßen Tragrostes in eine Trennkolonne.

Erfindungsgemäß wird die Aufgabe in der Weise gelöst, dass der Tragrost für Füllkörperpackungen aus plattenförmigen zur Einbauebene senkrecht angeordneten Tragleisten 1 besteht, die mit zur Einbauebene senkrecht angeordnete Abstandsleisten 2 kreuzförmig verbunden sind, wobei in Richtung der Abstandsleisten 2 Konturleisten 3 angeordnet sind, die Öffnungen d aufweisen und zueinander in einem Winkel α und in einem Abstand a angeordnet sind und die Größe der Öffnungen d und der Abstände a so gewählt sind, dass aufliegende Füllkörper nicht passieren können, wobei der maximale Öffnungsquerschnitt bis zu 90% beträgt.

Vorzugsweise ist der Tragrost einer, bei dem die Tragleisten 1, Abstandsleisten 2 und/oder Konturleisten 3 aus Metall, Polymeren oder Verbundwerkstoffen bestehen.

Vorzugsweise bestehen die Tragleisten 1, Abstandsleisten 2 und/oder Konturleisten 3 aus Edelstahl, Glasfaser verstärkten Polymeren, Carbonfaser verstärkten Polymeren oder Carbonfaser verstärkten Kohlenstoff, wobei Carbonfaser verstärkter Kohlenstoff durch seine große chemische Beständigkeit, hohe Temperatur- und mechanische Belastbarkeit sowie sein geringes Eigengewicht besonders bevorzugt ist.

Die Konturleisten 3 des erfindungsgemäßen Tragrostes sind vorzugsweise zueinander einen Winkel α im Bereich von 30° bis 60° angeordnet, wobei die Öffnungen d der Konturleisten 3 schlitzförmige Öffnungen d sind, die sich in Längsrichtung der Konturleisten 3 erstrecken und eine Breite von 5 bis 30 mm sowie eine Länge von 10 bis 100 mm aufweisen.

Besonders bevorzugt ist die Gestaltung des erfindungsgemäßen Tragrostes in der Weise, dass die Tragleisten 1, Abstandsleisten 2 und/oder Konturleisten 3 zu vormontierten Gruppen verbunden sind. Solche vormontierten Gruppen gestatten bei Montage und Wartung den Ein- und Ausbau durch Montageöffnungen in Form von Mannlöchern.

Dabei sind die vormontierten Gruppen im Einbauzustand durch Steckklammern 4 miteinander verbunden. Die Tragleisten 1, Abstandsleisten 2 und/oder Konturleisten 3 weisen eine Dicke von 3 bis 20 mm auf.

Die Einbauhöhe eines erfindungsgemäßen Tragrostes liegt im Bereich von 50 bis 300 mm.

Vorteilhafter Weise ist jede einzelne Tragleiste 1, Abstandsleiste 2 und/oder Konturleiste 3 des erfindungsgemäßen Tragrostes separat austauschbar. Dadurch kann in sehr ökonomischer Weise eine Wartung der mit den erfindungsgemäßen Tragrosten versehenen Trennkolonnen erfolgen.

Das erfindungsgemäße Verfahren zum Montieren eines Tragrostes für Füllkörperpackungen erfolgt in der Weise, dass die plattenförmigen Tragleisten 1, Abstandsleisten 2 und/oder Konturleisten 3 zu Gruppen zusammengesteckt, in eine Füllkörper-Kolonne durch Inspektionsöffnungen (Mannlöcher) eingebracht und die Gruppen untereinander durch Steckklammern 4 verbunden werden.

Dabei werden die Tragleisten 1 der Gruppen um ihre Breite versetzt zueinander angeordnet und überlappen sich soweit, dass sie durch von oben eingebrachte Steckklammern 4 verbunden werden können. Diese konstruktive Gestaltung gestattet in einfacher Weise die Montage und Demontage von Abschnitten des erfindungsgemäßen Tragrostes. Weiterhin können durch die bevorzugt eingesetzte Steckverbindung der Einzelteile die einzelnen Bauteile auch separat ausgetauscht werden.

Die Erfindung wird nachfolgend an Hand von drei Figuren näher erläutert.

Es zeigen:
Figur 1 - eine perspektivische Ansicht des erfindungsgemäßen Tragrostes;
Figur 2 - einen Ausschnitt aus der Draufsicht auf den erfindungsgemäßen Tragrost und
Figur 3 - einen Ausschnitt aus dem Querschnitt durch den erfindungsgemäßen Tragrost

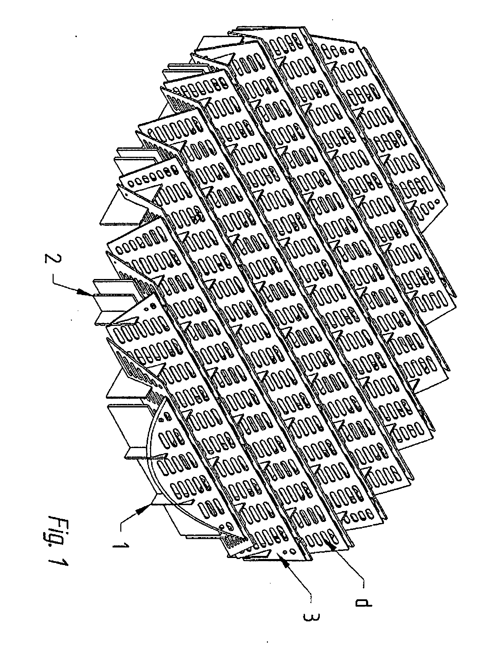

Figur 1 zeigt eine perspektivische Ansicht des erfindungsgemäßen Tragrostes, bei dem aus den plattenförmigen Tragleisten 1 und Abstandsleisten 2 ein kreuzförmig ineinander gestecktes Grundgerüst gebildet wird, in das dann die Konturleisten 3 eingesteckt sind. Die Abstandsleisten 2 haben gleichfalls eine Tragefunktion. Die Konturleisten 3 besitzen schlitzförmige Öffnungen d mit einer Breite und einer Länge im Bereich von 15 bis 80 mm und sind im Abstand a im Bereich von 10 bis 20 mm voneinander angeordnet. Die Konturleisten 3 schließen gegeneinander den Winkel α im Bereich von 35° bis 55° ein. Die Größe der Öffnungen d in den Konturleisten 3 und die Abstände a der Konturleisten 3 sind so bemessen, dass die aufliegenden Füllkörper oder bei einem Bruch einzelner Füllkörper die Bruchstücke den Tragrost im wesentlichen nicht passieren können. Der Öffnungsquerschnitt kann bis zu 90% erreichen.

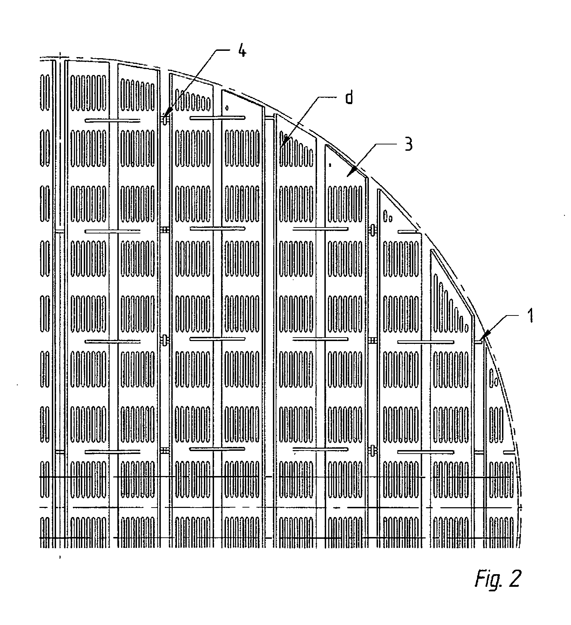

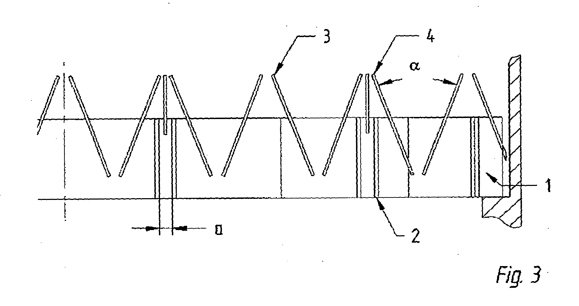

Figur 2 zeigt einen Ausschnitt aus der Draufsicht und Figur 3 einen Ausschnitt aus dem Querschnitt durch den erfindungsgemäßen Tragrost. Die einzelnen vormontierten Gruppen sind aus den plattenförmigen Tragleisten 1, Abstandsleisten 2 und Konturleisten 3 zusammengesteckt. Die Tragleisten 1 der einzelnen Gruppen sind um ihre Breite versetzt zueinander angeordnet und überlappen sich soweit, dass sie durch von oben eingebrachte Steckklammern 4 verbunden werden können.

### Bezugszeichenliste

- 1 -: Tragleiste
- 2 -: Abstandsleiste
- 3 -: Konturleiste
- 4 -: Steckklammer
- a -: minimaler Abstand der Konturleisten voneinander
- d -: Öffnungen in den Konturleisten
- α -: Winkel der von den Konturleisten eingeschlossen wird

## Patentansprüche

1. Tragrost für Füllkörperpackungen bestehend aus plattenförmigen zur Einbauebene senkrecht angeordneten Tragleisten (1), die mit zur Einbauebene senkrecht angeordnete Abstandsleisten (2) kreuzförmig verbunden sind, wobei in Richtung der Abstandsleisten (2) Konturleisten (3) angeordnet sind, die Öffnungen d aufweisen und zueinander in einem Winkel α und in einem Abstand a angeordnet sind und die Größe der Öffnungen d und der Abstände a so gewählt sind, dass aufliegende Füllkörper nicht passieren können, wobei der maximale Öffnungsquerschnitt bis zu 90% beträgt.

2. Tragrost nach Anspruch 1, **dadurch gekennzeichnet, dass** die Tragleisten (1), Abstandsleisten (2) und/oder Konturleisten (3) aus Metall, Polymeren oder Verbundwerkstoffen bestehen.

3. Tragrost nach Anspruch 2, **dadurch gekennzeichnet, dass** die Tragleisten (1), Abstandsleisten (2) und/oder Konturleisten (3) aus Edelstahl, Glasfaser verstärkten Polymeren, Carbonfaser verstärkten Polymeren oder Carbonfaser verstärkten Kohlenstoff besteht.

4. Tragrost nach Anspruch 1 bis 3, **dadurch gekennzeichnet, dass** die Konturleisten (3) zueinander einen Winkel α im Bereich von 30° bis 60° aufweisen.

5. Tragrost nach Anspruch 1 bis 4, **dadurch gekennzeichnet, dass** die Öffnungen d der Konturleisten (3) schlitzförmig Öffnungen d sind, die sich in Längsrichtung der Konturleisten (3) erstrecken und eine Breite von 5 bis 30 mm sowie eine Länge von 10 bis 100 mm aufweisen,

6. Tragrost nach Anspruch 1 bis 5, **dadurch gekennzeichnet, dass** die Tragleisten (1), Abstandsleisten (2) und/oder Konturleisten (3) zu vormontierten Gruppen verbunden sind.

7. Tragrost nach Anspruch 6, **dadurch gekennzeichnet, dass** die vormontierten Gruppen im Einbauzustand durch Steckklammern (4) miteinander verbunden sind.

8. Tragrost nach Anspruch 1 bis 7, **dadurch gekennzeichnet, dass** die Tragleisten (1), Abstandsleisten (2) und/oder Konturleisten (3) eine Dicke von 3 bis 20 mm aufweisen.

9. Tragrost nach Anspruch 1 bis 8, **dadurch gekennzeichnet, dass** er eine Einbauhöhe von 50 bis 300 mm aufweist.

10. Tragrost nach Anspruch 1 bis 9, **dadurch gekennzeichnet, dass** jede einzelne Tragleiste (1), Abstandsleiste (2) und/oder Konturleiste (3) separat austauschbar ist.

## Claims

1. A support grid for filling material packings, the support grid comprising:
spacer strips (2) disposed perpendicularly to an installation plane;
plate-shaped support strips (1) disposed perpendicularly to the installation plane and connected in a cruciform manner to said spacer strips (2);
contour strips (3) disposed in direction of said spacer strips (2), said contour strips (3) having orifices (d) disposed therein, and said contour strips being disposed at an angle (a) and at spacings with respect to one another;
said orifices and said spacings having a size preventing filling materials lying in place from passing through; and
said orifices (d) having a maximum orifice cross section amounting to up to 90%.

2. The support grid according to claim 1, wherein at least one of said support strips (1), said spacer strips (2) and/or said contour strips (3) are formed of a material selected from the group consisting of metal, polymers and composite materials.

3. The support grid according to claim 2, wherein at least one of said support strips (1), said spacer strips (2) and/or said contour strips (3) are formed of a material selected from the group consisting of high-grade steel, glass fiber-reinforced polymers, carbon fiber-reinforced polymers and carbon fiber-reinforced carbon.

4. The support grid according to claims 1 to 3, wherein said contour strips (3) are disposed at an angle (a) in a range of from 30° to 60° relative to one another.

5. The support grid according to claims 1 to 4, wherein said orifices (d) of said contour strips (3) are slot-shaped orifices (d) extending in a longitudinal direction of said contour strips (3) and having a width of 5 to 30 mm and a length of 10 to 100 mm.

6. The support grid according to claims 1 to 5, wherein at least one of said support strips (1), said spacer strips (2) and/or said contour strips (3) are connected to form preassembled groups.

7. The support grid according to claim 6, which further comprises plug-in staples interconnecting said preassembled groups (4) in an installation state.

8. The support grid according to claims 1 to 7, wherein at least one of said support strips (1), said spacer strips (2) and/or said contour strips (3) have a thickness of 3 to 20 mm.

9. The support grid according to claims 1 to 8, wherein the support grid has an installation height of 50 to 300 mm.

10. The support grid according to claims 1 to 9, wherein at least one of each of said support strips (1), said spacer strips (2) or said contour strips (3) can be individually exchanged separately.

## Revendications

1. Grille de support pour des empaquetages de masses de remplissage, composée de longerons de support (1) en forme de plaques, installés perpendiculairement au plan de montage, ces longerons étant reliés de façon croisée à des longerons d'écartement (2) installés perpendiculairement au plan de montage, et dans la direction des longerons d'écartement (2), il y a des longerons de contour (3) comportant des ouvertures (d) et installés les uns par rapport aux autres selon un angle (α) et à un intervalle (a), les dimensions des ouvertures (d) et celles des intervalles (a) étant choisies pour que des masses de remplissage, placées au-dessus, ne puissent les traverser, la section maximale d'ouverture allant jusqu'à 90 %.

2. Grille de support selon la revendication 1,
**caractérisée en ce que** les longerons de support (1), les longerons d'écartement (2) et/ou les longerons de contour (3), sont réalisés en métal, en polymères ou en matériaux composites.

3. Grille de support selon la revendication 2,
**caractérisée en ce que** les longerons de support (1), les longerons d'écartement (2) et/ou les longerons de contour (3), sont en acier-inoxydable, en polymères renforcés par des fibres de verre, en polymères renforcés par des fibres de carbone ou carbone renforcé par des fibres de carbone.

4. Grille de support selon les revendications 1 à 3,
**caractérisée en ce que** les longerons de contour (3) font entre eux un angle (α) de l'ordre 30° à 60°.

5. Grille de support selon les revendications 1 à 4,
**caractérisée en ce que** les ouvertures (d) des longerons de contour (3) sont des ouvertures (d) en forme de fentes s'étendant dans la direction longitudinale des longerons de contour (3) et ayant une largeur comprise entre 5 et 30 mm et une longueur comprise entre 10 et 100 mm.

6. Grille de support selon les revendications 1 à 5,
**caractérisée en ce que** les longerons de support (1), les longerons d'écartement (2) et/ou les longerons de contour (3), sont reliés sous la forme de groupes pré-assemblés.

7. Grille de support selon la revendication 6,
**caractérisée en ce que** les groupes pré-assemblés sont reliés à l'état de montage par des pinces enfichées (4).

8. Grille de support selon les revendications 1 à 7,
**caractérisée en ce que** les longerons de support (1), les longerons d'écartement (2) et/ou les longerons de contour (3), ont une épaisseur comprise entre 3 et 20 mm.

9. Grille de support selon les revendications 1 à 8,
**caractérisée en ce qu'** elle présente une hauteur de montage de 50 à 300 mm.

10. Grille de support selon les revendications 1 à 9,
**caractérisée en ce que** chaque longeron de support (1), longeron d'écartement (2) et/ou longeron de contour (3), pris séparément peut être remplacé individuellement.
